# FASCICULE DE BREVET EUROPEEN

(11) **EP 1 210 556 B1**
(45) Date de publication et mention de la délivrance du brevet: **17.03.2004**
(21) Numéro de dépôt: 00953408.2
(22) Date de dépôt: 04.09.2000
(51) Int. Cl.: F25B 15/02

(54) **PROCEDE ET DISPOSITIF DE REFROIDISSEMENT PAR ABSORPTION**
ABSORPTIONSKÜHLVERFAHREN UND VORRICHTUNG
METHOD AND DEVICE FOR ABSORPTION COOLING

(30) Priorité: 08.09.1999 EP 99810805; 07.02.2000 EP 00102520
(43) Date de publication de la demande: 05.06.2002
(73) Titulaire: S.F.T. SERVICES SA, 1950 Sion (CH)
(72) Inventeur: BRUZZO, Vital, I-36040 Vicenza (IT)
(74) Mandataire: Cronin, Brian Harold John
(86) Numéro de dépôt international: PCT/IB2000/001246
(87) Numéro de publication internationale: WO 2001/018463

(56) Documents cités:
- EP-A- 0 397 482
- EP-A- 0 681 152
- DE-A- 2 719 995
- DE-A- 2 856 767
- DE-A- 3 136 273
- DE-C- 960 996
- FR-A- 998 813
- US-A- 4 269 041
- US-A- 5 231 849
- US-A- 5 351 504

## Description

La présente invention concerne un procédé et un dispositif pour la génération de froid par absorption, et plus particulièrement un procédé et un dispositif pour l'accélération de la mise en route du processus de refroidissement.

Un système de refroidissement par absorption comprend schématiquement un générateur, un évaporateur et un condenseur. Pour fonctionner, le générateur est rempli d'un mélange d'au moins deux substances miscibles ci-après dénommé mélange binaire (un réfrigérant et un absorbant). Ce mélange est combiné dans un absorbeur, dans lequel l'absorption du réfrigérant par l'absorbant a lieu. Le réfrigérant et l'absorbant doivent avoir une pression d'évaporation suffisamment différente pour que, lorsque le générateur est chauffé, le plus volatil des deux, soit le réfrigérant, s'évapore et se transforme en un liquide dans le condenseur.

Le système à absorption inclut usuellement une pompe pour retourner le mélange binaire de l'absorbeur vers le générateur. Les vapeurs passent par le condenseur qui les condensent en un liquide, lequel est amené vers la valve d'expansion de l'évaporateur pour l'effet de refroidissement souhaité.

Ce principe étant basé sur l'échauffement du mélange binaire, le processus de démarrage est relativement lent. En effet, la température du mélange binaire doit s'élever de plusieurs dizaines de degré avant de se transformer en vapeur. Tant que la vapeur n'est pas produite, la fonction de refroidissement demeure sans effet.

Un tel dispositif, selon le préambule de la revendication 1, est décrit dans le document DE 28 56 767 A .

L'objet de la présente invention est de permettre la génération du froid par un tel système dès la mise en fonction du système de refroidissement.

Ce but est atteint par un dispositif de stockage du réfrigérant sous pression dans un réservoir prévu à cet effet, et par un contrôle d'accès audit réservoir par l'intermédiaire de deux vannes selon les revendications 1 et 5.

Selon l'invention, le mélange sous pression est accumulé dans un réservoir au cours du fonctionnement normal du système de refroidissement. Une fois le système stoppé, ce réfrigérant sous pression est stocké dans le réservoir grâce à la fermeture des vannes en amont et en aval du réservoir. Ce dernier se trouve donc isolé du circuit de refroidissement et conserve ainsi le réfrigérant sous pression.

Dès la mise en fonction du système de refroidissement, cette pression va être utilisée pour alimenter en liquide réfrigérant sous pression, le circuit de refroidissement et ainsi immédiatement produire du froid. A cet effet, la vanne en aval en direction de l'évaporateur, sera ouverte, alors que celle en amont, du côté du condenseur, est maintenue fermée. Cette dernière reste fermée tant que la pression à la sortie du condenseur est plus basse que celle dans le réservoir.

Un fois le processus de génération de vapeur opérationnel, la vanne amont laisse passer le réfrigérant sous pression qui va, d'une part, alimenter l'évaporateur et d'autre part, remplir le réservoir pour une prochaine utilisation.

L'invention sera mieux comprise grâce à la description détaillée qui va suivre en se référant aux dessins annexés qui sont donnés à titre d'exemple nullement limitatif, dans lesquels:
- la figure 1 représente le dispositif de stockage du réfrigérant sous pression
- la figure 2 représente une variante monobloc.

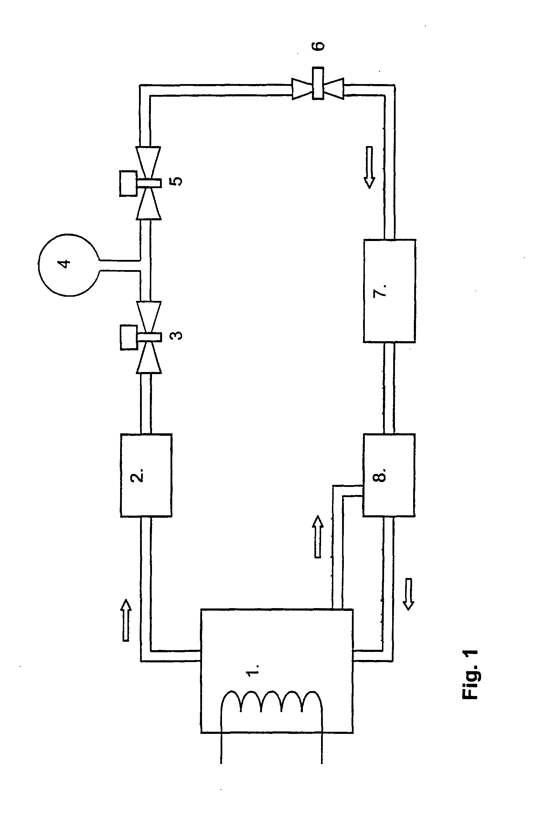

Dans la figure 1, le générateur 1 utilise comme source d'énergie une résistance électrique. Le mélange réfrigérant-absorbant est chauffé et le plus volatil des deux composants, soit le réfrigérant, est transformé en vapeur. Ces vapeurs sont condensées en un liquide dans le condenseur 2. Le liquide sous pression arrive ensuite dans la vanne amont 3 qui permet d'accéder au réservoir 4. Cette vanne amont 3 peut, par exemple, être commandée électriquement par un dispositif qui mesure les différentes pressions. Il peut également s'agir d'une vanne différentielle qui s'ouvre dès que la pression amont excède la pression aval. Elle fonctionne donc comme anti-retour.

En aval du réservoir 4, une deuxième vanne 5 est nécessaire pour le fonctionnement de l'ensemble. Cette vanne est en général commandée par l'alimentation du système. Dès que le système de refroidissement est interrompu, elle est immédiatement fermée pour maintenir la pression dans le réservoir 4. De la même manière, dès que le système est enclenché, elle s'ouvre pour que le réfrigérant sous pression puisse alimenter l'évaporateur 7 par la vanne d'expansion 6.

Le réfrigérant est ensuite amené dans l'absorbeur 8 qui le mélange avec l'absorbant pour être réinjecté dans le générateur 1.

La chaleur générée dans le générateur 1 peut avoir différentes origines. Selon la représentation de la figure 1, elle peut être d'origine électrique ou peut provenir d'autres sources de chaleur, par exemple provenir des gaz d'échappement d'un moteur à combustion.

Selon une forme d'exécution, il est possible d'ajouter une vanne supplémentaire pour l'accès au réservoir afin de ne pas ralentir la mise en route du processus dans le cas où le réservoir est vide. Cette vanne ne s'ouvre que lorsque le système produit suffisamment de liquide sous pression afin de pouvoir en stocker une partie dans ledit réservoir.

Selon une forme particulière de l'invention, il est possible, lors de l'arrêt du système de refroidissement, de fermer la vanne aval 5 avant de stopper la production de vapeur. Ainsi, une surpression est produite dans le condenseur, surpression qui va être stockée dans le réservoir 4. Lorsque la pression souhaitée est atteinte, le générateur 1 est déclenché. Cette surpression accumulée dans le réservoir 4 va pouvoir produire plus longtemps du froid lors d'un prochain redémarrage du système.

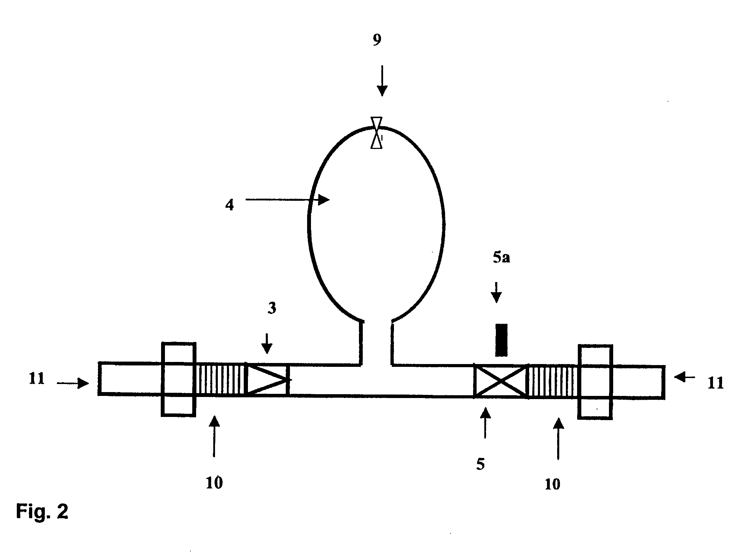

Pour satisfaire aux critères de sécurité, il est proposé une variante monobloc de l'ensemble tel qu'illustré à la figure 2. Cet ensemble est composé d'un réservoir 4 avec sa paroi sans soudure, moulé d'une pièce en un matériaux résistant à l'ammoniac. De plus, il est dimensionné pour supporter une pression de 50 atmosphères.

Comme indiqué plus haut, cet ensemble est équipé d'une vanne de non retour en amont 3, d'une électrovanne en aval 5, ainsi que d'une valve de sécurité 9 calibrée à 40 atmosphères. Les trois éléments: vanne de non retour, électrovanne, valve de sécurité font parties de l'ensemble et ne peuvent être remplacées individuellement.

De ce fait, le remplacement de l'ensemble réservoir pourra se faire sans danger même si dans le réservoir, de l'ammoniac sous pression demeure. Seule la bobine 5a de l'électrovanne 5 pourra être remplacée individuellement.

Les deux extrémités du tube 10 sont soit soudées, soit raccordées grâce à deux raccords coniques avec joints déformables 11.

L'ensemble proposé peut avoir des dimensions et formes différentes suivant le véhicule ou la machine sur lequel il sera monté.

Dans certains cas, la vanne de non retour 3 est remplacée par une électrovanne.

## Revendications

1. Système de production de froid par absorption comprenant un générateur (1), un condenseur (2), un évaporateur (7), une valve d'expansion (6) et un absorbeur (8) et un ensemble de stockage de liquide réfrigérant sous pression composé d'au moins un réservoir (4), d'une vanne (3) en amont dudit réservoir (4) et d'une vanne (5) en aval dudit réservoir (4) **caractérisé en ce que** la vanne amont (3) est passante dès lors que la pression à la sortie du condensateur (2) est plus grande ou égale à la pression dans le réservoir et que la vanne aval (5) est bloquée dès que le générateur cesse de produire de la vapeur.

2. Système selon la revendication 1, **caractérisé en ce que** le réservoir (4) comprend une valve de sécurité (9).

3. Système selon la revendication 1, **caractérisé en ce que** l'ensemble réservoir (4), vanne amont (3) et vanne aval (5) sont montés de sorte que ces trois éléments soient indémontables.

4. Système selon la revendication 1, **caractérisé en ce que** la vanne amont (3) est une électrovanne.

5. Méthode de production de froid par absorption comprenant les étapes suivantes:
- chauffage d'un mélange réfrigérant-absorbant jusqu'à l'évaporation du réfrigérant dans un bouilleur (1),
- condensation des vapeurs de réfrigérant sous forme liquide dans un condenseur (2),
- détente du réfrigérant sous pression dans un évaporateur (7),
- absorption du réfrigérant détendu avec l'absorbant dans l'absorbeur (8),
- stockage du réfrigérant sous forme liquide dans un réservoir (4) placé entre le condenseur (2) et l'évaporateur (7) ;
**caractérisée en ce qu'**elle comprend de plus les étapes de:
- ouverture d'une vanne aval (5) dès que la production de froid est souhaitée, le réservoir déversant le liquide sous pression dans l'évaporateur (7) pour produire du froid
- ouverture d'une vanne amont (3) uniquement lorsque la pression à la sortie du condenseur (2) est supérieure à la pression dans le réservoir (4)
- fermeture de la vanne aval (5) dès lors que le bouilleur ne produit plus de vapeur.

6. Méthode selon la revendication 5, **caractérisée en ce que** la vanne aval (5) est fermée peu avant l'arrêt de production de vapeur, la surpression de liquide réfrigérant ainsi générée étant accumulée dans le réservoir (4).

## Patentansprüche

1. System zur Kälteerzeugung durch Absorption, das Folgendes umfasst: einen Generator (1), einen Kondensator (2), einen Verdampfer (7), ein Entspannungsventil (6) und einen Absorber (8) sowie eine Anordnung zur Speicherung von druckbeaufschlagtem Flüssigkältemittel, die aus mindestens einem Sammelbehälter (4), einem Ventil (3) stromaufwärts des Sammelbehälters (4) und einem Ventil (5) stromabwärts des Sammelbehälters (4) besteht, **dadurch gekennzeichnet, dass** das stromaufwärtige Ventil (3) durchlässt, solange der Druck am Ausgang des Kondensators (2) größer gleich dem Druck im Sammelbehälter ist, und das stromabwärtige Ventil (5) gesperrt ist, sobald der Generator keinen Dampf mehr erzeugt.

2. System nach Anspruch 1, **dadurch gekennzeichnet, dass** der Sammelbehälter (4) ein Sicherheitsventil (9) umfasst.

3. System nach Anspruch 1, **dadurch gekennzeichnet, dass** die aus dem Sammelbehälter (4), dem stromaufwärtigen Ventil (3) und dem stromabwärtigen Ventil (5) bestehende Anordnung so angeordnet ist, dass diese drei Elemente nicht demontierbar sind.

4. System nach Anspruch 1, **dadurch gekennzeichnet, dass** das stromaufwärtige Ventil (3) ein Elektroventil ist.

5. Verfahren zur Kälteerzeugung durch Absorption, mit den folgenden Schritten:
- Erhitzen eines Gemisches aus Kältemittel und Absporptionsmittel in einem Kocher (1) bis zur Verdampfung des Kältemittels,
- Kondensieren der Kältemitteldämpfe in flüssiger Form in einem Kondensator (2),
- Entspannen des druckbeaufschlagten Kältemittels in einem Verdampfer (7),
- Absorbieren des entspannten Kältemittels mit dem Absorptionsmittel in dem Absorber (8),
- Speichern des Kältemittels in flüssiger Form in einem zwischen dem Kondensator (2) und dem Verdampfer (7) angeordneten Sammelbehälter (4);
**dadurch gekennzeichnet, dass** es weiterhin die folgenden Schritte umfasst:
- Öffnen eines stromabwärtigen Ventils (5), sobald die Kälteerzeugung erwünscht ist, wobei der Sammelbehälter die druckbeaufschlagte Flüssigkeit in den Verdampfer (7) ableitet, um Kälte zu erzeugen;
- Öffnen eines stromaufwärtigen Ventils (3) nur dann, wenn der Druck am Ausgang des Kondensators (2) über dem Druck im Sammelbehälter (4) liegt; und
- Schließen des stromabwärtigen Ventils (5), sobald der Kocher keinen Dampf mehr erzeugt.

6. Verfahren nach Anspruch 5, **dadurch gekennzeichnet, dass** das stromabwärtige Ventil (5) kurz vor Anhalten der Dampferzeugung geschlossen wird, wobei der so erzeugte Überdruck des Flüssigkältemittels im Sammelbehälter (4) gespeichert wird.

## Claims

1. System for generating refrigeration by absorption comprising a generator (1), a condenser (2), an evaporator (7), an expansion valve (6) and an absorber (8) and a pressurized liquid refrigerant storage assembly composed of at least one tank (4), a valve (3) upstream of the said tank (4) and a valve (5) downstream of the said tank (4), **characterized in that** the upstream valve (3) is open whenever the pressure at the outlet side of the condenser (2) is greater than or equal to the pressure in the tank and **in that** the downstream valve (5) is closed whenever the generator ceases to produce vapour.

2. System according to Claim 1, **characterized in that** the tank (4) includes a safety valve (9).

3. System according to Claim 1, **characterized in that** the tank (4)/upstream valve (3)/downstream valve (5) assembly is mounted in such a way that these three elements cannot be disassembled.

4. System according to Claim 1, **characterized in that** the upstream valve (3) is a solenoid valve.

5. Method of generating refrigeration by absorption, comprising the following steps :
- heating of a refrigerant/absorbent mixture until evaporation of the refrigerant in a reboiler (1) ;
- condensation of the refrigerant vapour in the form of liquid in a condenser (2) ;
- expansion of the pressurized refrigerant in an evaporator (7) ;
- absorption of the expanded refrigerant with the absorbent in the absorber (8) ;
- storage of the refrigerant in liquid form in a tank (4) placed between the condenser (2) and the evaporator (7) ; **characterized in that** it additionally includes the steps of:
- opening of a downstream valve (5) whenever the generation of refrigeration is desired, the tank delivering the pressurized liquid to the evaporator (7) in order to generate refrigeration ;
- opening of an upstream valve (3) only when the pressure at the outlet side of the condenser (2) is above the pressure in the tank (4) ; and
- closing of the downstream valve (5) whenever the reboiler no longer produces vapour.

6. Method according to Claim 5, **characterized in that** the downstream valve (5) is closed shortly before vapour production ceases, the liquid refrigerant overpressure thus generated being taken up in the tank (4).
